# FASCICULE DE BREVET EUROPEEN

(11) **EP 1 193 141 B1**
(45) Date de publication et mention de la délivrance du brevet: **24.11.2004**
(21) Numéro de dépôt: 01402374.1
(22) Date de dépôt: 14.09.2001
(51) Int. Cl.: B60R 21/20

(54) **Siège de véhicule automobile comportant un appui-tête et un sac gonflable à l'intérieur de l'appui-tète**
Kraftfahrzeugsitz mit einer Kopfstütze, die ein integriertes Gaskissen enthält
Vehicle seat comprising a headrest and an inflatable cushion inside the headrest

(30) Priorité: 28.09.2000 FR 0012382
(43) Date de publication de la demande: 03.04.2002
(73) Titulaire: Peugeot Citroen Automobiles SA, 92200 Neuilly sur Seine (FR)
(72) Inventeur: Arnaud, Mathieu, 80260 Vaux en Amienois (FR); Quentin, Frédéric, 75013 Paris (FR)
(74) Mandataire: Bouget, Lucien

(56) Documents cités:
- EP-A- 0 884 214
- DE-A- 3 741 637
- DE-A- 19 505 216
- US-A- 5 496 061

## Description

L'invention concerne un siège de véhicule automobile comportant un dossier et un appui-tête fixé au-dessus d'une partie supérieure du dossier et un sac gonflable logé dans l'appui-tête.

Pour équiper les véhicules automobiles de conception moderne, on a proposé de nombreux dispositifs de sécurité tels que des ceintures ou des sacs gonflables qui sont destinés à protéger les utilisateurs des véhicules automobiles, qu'ils se trouvent à l'emplacement du conducteur au poste de conduite ou à une place de passager.

Cependant, dans le cas de certains accidents de la route, on s'est aperçu que les dispositifs de sécurité existants sont inefficaces pour assurer une protection complète des utilisateurs. Notamment, dans le cas d'accidents de la route au cours desquels un véhicule automobile se retourne et subit une rotation autour de son axe longitudinal, les occupants du véhicule automobile peuvent subir, dans l'habitacle, au cours du retournement ou de retournements successifs du véhicule automobile, des chocs sur la tête occasionnant des blessures graves et parfois mortelles. Dans le cas des cabriolets roulant à l'état découvert, lors d'une rotation du véhicule autour de son axe longitudinal, les occupants du véhicule peuvent être éjectés partiellement de l'habitacle et subir de ce fait des chocs très violents, à l'extérieur du véhicule, occasionnant de très graves blessures.

On a donc pensé à utiliser des dispositifs de sécurité permettant de mieux fixer et solidariser l'occupant du véhicule sur son siège.

On a en particulier proposé des systèmes de ceinture de sécurité qui sont implantés dans l'habitacle et fixés sur des parties de carrosserie de l'habitacle. L'inconvénient de tels systèmes à ceinture de sécurité est qu'ils ne retiennent pas le torse et la tête de l'occupant lors de mouvements verticaux et transversaux tels que ceux qui sont provoqués par un retournement du véhicule automobile.

On a également proposé des systèmes de ceinture de sécurité qui sont intégrés à des sièges du véhicule automobile. De tels systèmes ne retiennent pas non plus le torse et la tête de l'occupant lors de mouvements transversaux provoqués par un retournement.

Dans le cas de véhicules de compétition, on utilise des systèmes de harnais qui sont efficaces mais qui sont difficilement utilisables sur des véhicules destinés au marché grand public, du fait des contraintes liées à leur utilisation, au moment où l'on fixe le harnais en position de protection et au moment où l'on détache le harnais pour libérer l'utilisateur.

On a donc proposé des dispositifs articulés de retenue de l'occupant contenus dans le dossier d'un siège de véhicule et se déployant au moment de l'accident en s'adaptant aux épaules de l'occupant du siège.

On a proposé également des sacs gonflables ou airbags latéraux, généralement fixés dans le dossier du siège du véhicule automobile.

De tels dispositifs sont volumineux et chers et ne présentent pas toujours une efficacité satisfaisante.

Les sièges de véhicules automobiles et en particulier les sièges avant comportent généralement un appui-tête fixé au-dessus d'une partie supérieure du dossier dont la position peut être réglée en fonction de la taille et de la morphologie de l'occupant. De tels appuis-tête comportent une face antérieure destinée à servir de surface d'appui pour la tête d'un utilisateur du siège. L'appui-tête peut ainsi servir de moyen de retenue pour la tête de l'utilisateur dans le cas de certains chocs. Toutefois, la protection apportée par les appuis-tête est très limitée et même inexistante, dans le cas d'un retournement du véhicule automobile.

On connaît par le DE-A-19 505 216 un siège de véhicule automobile comportant un appui-tête renfermant un sac gonflable pouvant passer d'un état replié à l'intérieur de l'appui-tête à un état déployé dans lequel le sac s'étend latéralement par rapport à la tête et au cou d'un utilisateur du siège.

Le DE-A-37 41 367 fait également connaître un siège de véhicule automobile ayant un appui-tête renfermant un sac gonflable. A l'état déployé, le sac gonflable est susceptible de recouvrir une partie du thorax de l'utilisateur.

Le sac se déploie depuis une face latérale ou une face antérieure de l'appui-tête.

Le but de l'invention est donc de proposer un siège d'un véhicule automobile comportant un dossier et un appui-tête fixé au-dessus d'une partie supérieure du dossier et comportant une face antérieure destinée à servir de surface d'appui pour la tête d'un utilisateur du siège, l'appui-tête renfermant au moins un sac gonflable relié à une cartouche de gonflement et disposé à l'état replié dans une cavité de la matelassure de l'appui-tête, dont le gonflement est commandé par un détecteur d'un événement accidentel, pour faire passer le sac gonflable de l'état replié à l'intérieur de l'appui-tête à un état déployé dans lequel le sac s'étend latéralement par rapport à la tête et au cou et enveloppe une épaule et au moins une partie du thorax de l'utilisateur, le siège comportant des moyens de protection efficaces dans le cas d'accidents graves au cours desquels le véhicule automobile subit une rotation autour de son axe longitudinal.

Dans ce but, la cartouche et le sac à l'état replié sont dirigés de manière à faire sortir le sac gonflable de l'appui-tête par l'une des faces suivantes de l'appui-tête : face arrière de l'appui-tête dirigée vers l'arrière du siège à l'opposé de la surface d'appui (6a), face supérieure de l'appui-tête.

Afin de bien faire comprendre l'invention, on va décrire un siège de véhicule automobile suivant l'invention comportant un appui-tête et un dispositif de sécurité à sac gonflable dans l'appui-tête et son fonctionnement lors d'un accident de la route.

La figure 1 est une vue de côté du siège de véhicule automobile.

La figure 2 est une vue de face d'une partie supérieure du dossier et de l'appui-tête du siège de véhicule automobile équipé d'un dispositif de sécurité à sac gonflable.

La figure 3 est une vue de côté suivant 3-3 de la figure 2 montrant un sac gonflable en position déployée par rapport à la partie supérieure du corps d'un occupant du siège de véhicule automobile.

La figure 4 est une vue de dessus suivant 4 de la figure 2 montrant la position à l'état déployé de deux sacs gonflables de l'appui-tête du siège, par rapport à la tête d'un occupant du siège de véhicule automobile.

La figure 5 est une vue de face du siège de véhicule automobile montrant la position déployée de deux sacs gonflables de l'appui-tête, par rapport à la partie supérieure du corps d'un occupant du siège de véhicule automobile.

La figure 6 est une vue en perspective d'un sac gonflable d'un appui-tête de siège suivant l'invention en position déployée.

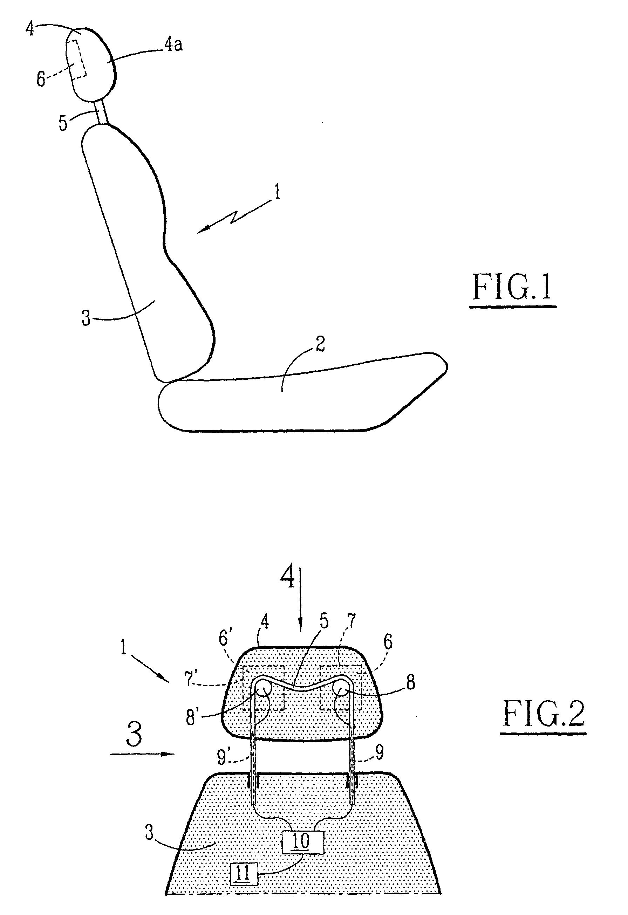

Sur la figure 1, on a représenté un siège de véhicule automobile désigné de manière générale par le repère 1 comportant, de manière habituelle, une assise 2 et un dossier 3.

Le siège 1, qui peut être un siège avant de véhicule automobile, comporte un appui-tête 4 fixé sur une partie supérieure du dossier 3, par l'intermédiaire d'une armature 5 constituée par exemple par une barre ou tube en acier.

Le siège de véhicule 1, réalisé suivant l'invention, comporte, à l'intérieur de son appui-tête 4, un dispositif de sécurité constitué par au moins un sac gonflable 6.

La face 4a de l'appui-tête 4 dirigée vers l'avant du siège 1 constitue une surface d'appui pour la tête d'un occupant du siège 1 de véhicule automobile, par exemple dans le cas d'un choc ou d'une accélération brusque, de telle sorte qu'une force dirigée vers l'arrière soit exercée sur la tête de l'occupant du siège. L'appui-tête 4 comporte, autour de l'armature 5 en acier, une matelassure qui est recouverte extérieurement par un tissu de garnissage, au moins sur la face avant 4a de l'appui-tête.

Comme il est visible sur la figure 2, l'armature 5 de l'appui-tête 4 peut présenter une forme générale en U, les deux branches droites du U étant engagées dans des ouvertures de la partie supérieure du dossier 3 du siège pour la fixation de l'appui-tête. Les branches droites de l'armature 5 et la partie supérieure du siège comportent des moyens coopérant pour régler la hauteur de l'appui-tête 4, en fonction de la taille et de la morphologie de l'occupant du siège 1.

Selon l'invention, deux cavités 7 et 7' sont ménagées dans la matelassure 4 de l'appui-tête dans lesquelles peuvent être logés deux sacs gonflables 6 et 6' à l'état plié et une cartouche de gonflement respective 8 ou 8' du sac gonflable. Les cartouches 8 et 8', et par leur intermédiaire les sacs gonflables 6 et 6', sont fixés sur l'armature 5 de l'appui-tête, de préférence dans les angles séparant la branche commune et les deux branches droites parallèles de l'armature 5.

Les cartouches 8 et 8' sont reliées par des fils électriques respectifs 9 et 9' à un ensemble de commande 10 relié à un détecteur 11 qui peut être, par exemple, un détecteur d'assiette du véhicule automobile susceptible d'émettre un signal d'actionnement de la commande 10 des cartouches 8 et 8' des sacs gonflables, dans le cas d'un accident de la route se traduisant par une rotation du véhicule automobile autour de son axe longitudinal.

Le module de commande 10 des sacs gonflables 6 et 6' peut être placé dans le dossier 3 du siège de véhicule automobile, l'encombrement du boîtier renfermant le module de commande 10 étant réduit et sensiblement inférieur à l'encombrement d'un dispositif de sécurité à sac gonflable à disposition latérale placé dans le dossier 3. En effet, comme indiqué plus haut, un des inconvénients des dispositifs de sécurité à sac gonflable à disposition latérale disposé dans le dossier d'un siège de véhicule automobile est l'encombrement de ces dispositifs.

La disposition de sac gonflable dans l'appui-tête du véhicule automobile permet donc de limiter l'encombrement des dispositifs de sécurité dans le dossier du siège.

Les cartouches 8 et 8' de gonflement des sacs gonflables 6 et 6' sont dirigées, de préférence, vers l'arrière de l'appui-tête 4, de façon que la charge contenue dans la cartouche et assurant le gonflement du sac ne puisse occasionner de blessure à la tête de l'occupant du siège. De même, lors de sa sortie de l'appui-tête, le sac gonflable est d'abord dirigé vers l'arrière à l'opposé de la tête de l'occupant pour éviter de lui faire subir un choc au moment de la sortie et du gonflement du sac.

Toutefois, il est possible également de placer les cartouches de gonflement des sacs gonflables dans des dispositions où elles sont dirigées soit vers les côtés latéraux, soit vers la face supérieure de l'appui-tête 4. Les seules faces de l'appui-tête qui ne peuvent être utilisées pour la sortie du sac sont la face d'appui frontale et la face inférieure de l'appui-tête.

L'actionnement du module de commande 10 des sacs gonflables 6 et 6' par le détecteur d'assiette 11 du véhicule automobile est assuré dès le début de l'accident de la route se traduisant par un retournement du véhicule automobile autour de son axe longitudinal. Les sacs gonflables 6 et 6' sont alors extraits de l'appui-tête et gonflés par les cartouches 8 et 8' en un temps très court.

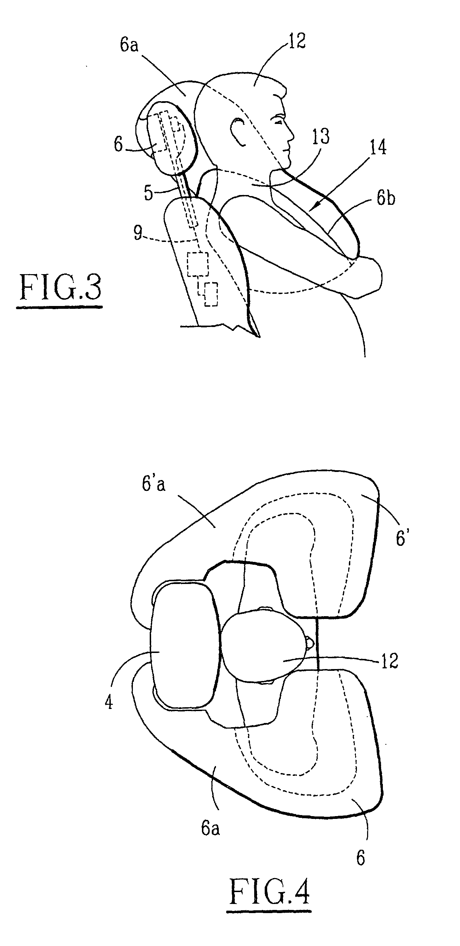

Sur la figure 3, on a représenté l'un des sacs gonflables à l'état extrait et à l'état gonflé dans une vue latérale.

Sur la figure 4 on a représenté les deux sacs gonflables 6 et 6' disposés de part et d'autre de la tête 12 d'un occupant du siège de véhicule automobile, en vue de dessus, dans leurs positions extraite et gonflée.

On voit sur les figures 3 et 4, que la tête 12 et le cou 13 de l'occupant 14 du siège 1 du véhicule automobile sont protégés latéralement par les sacs gonflables 6 et 6' qui se trouvent en vis-à-vis de la tête et du cou du passager, sur les côtés latéraux droit et gauche de l'appui-tête 4.

Dès le début de l'accident se traduisant par un retournement du véhicule automobile, la tête du passager 14 est donc protégée contre des chocs latéraux à l'intérieur de l'habitacle du véhicule automobile.

En outre, comme il est visible sur les figures 3, 4 et 5, les sacs gonflables 6 et 6' comportent, en plus de leurs parties supérieures respectives 6a et 6'a situées de part et d'autre de la tête 12 et du cou 13 du passager du véhicule dans la position gonflée des sacs 6 et 6', deux parties inférieures respectives 6b et 6'b enveloppant chacune une épaule 16 ou 16' du passager 14 et une partie respective 15 ou 15' du thorax du passager 14, dans leur état gonflé.

De ce fait, dès le début de l'accident de la route, le passager est maintenu sur son siège par le dessus et vers l'avant, par les parties inférieures du sac gonflable, de sorte qu'on évite des chocs sur la tête 12 du passager, à l'intérieur de l'habitacle, par des mouvements verticaux ou vers l'avant.

Dans le cas d'un cabriolet à l'état découvert, les sacs gonflables interdisent une éjection même partielle du passager hors de l'habitacle ouvert vers le haut.

Sur la figure 6, on a représenté, à l'état gonflé, le sac gonflable 6 situé à droite du siège, lorsqu'on regarde le siège de l'arrière vers l'avant, c'est-à-dire depuis l'arrière du dossier 3. Le sac gonflable 6 est représenté à l'état gonflé, en perspective, vu depuis l'arrière du siège. Sur la partie supérieure 6a du sac gonflable 6, est prévu un ajutage 17 de raccordement du sac à la cartouche de gonflement 8 correspondante, pour assurer à la fois la fixation du sac à l'appui-tête sur l'armature de laquelle est fixée la cartouche 8 et l'admission de gaz pour le gonflement du sac jusqu'à son état gonflé, comme représenté sur la figure 6.

La partie supérieure 6a du sac présente la forme d'un coussin destiné à se déployer autour de l'appui-tête, par exemple à partir de sa face arrière et à occuper une disposition latérale à droite de l'appui-tête.

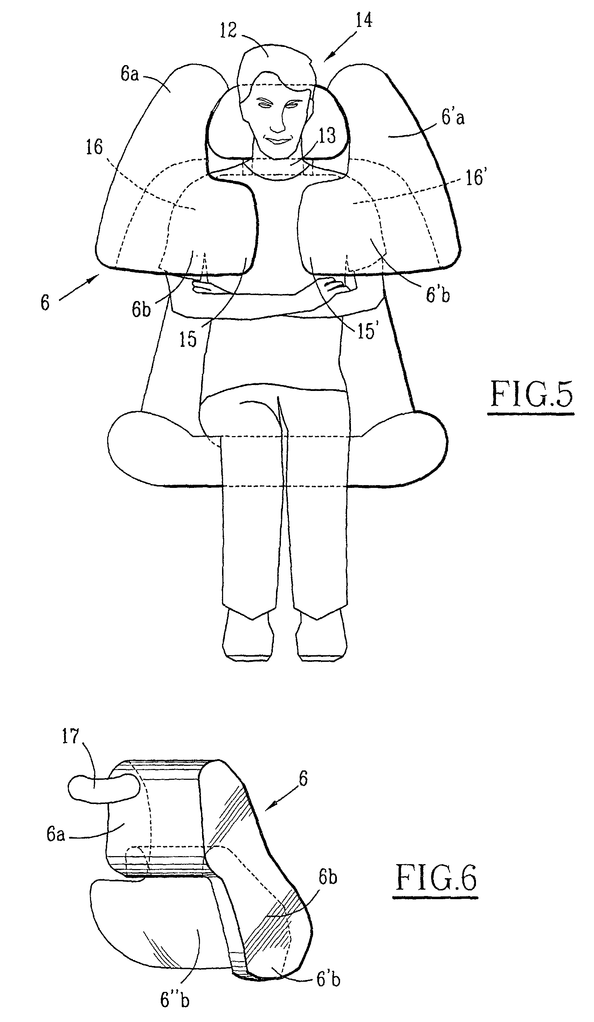

La partie inférieure 6b du sac gonflable comporte une partie latérale 6'b destinée à envelopper l'épaule droite de l'occupant 14 et une partie frontale 6"b destinée à venir se rabattre contre une partie du thorax du passager 14, comme il est visible en particulier sur la figure 5.

Le sac gonflable 6' disposé sur la partie de gauche de l'appui-tête 4 et destiné à se déployer sur la gauche du siège est symétrique du sac gonflable 6 situé à droite par rapport à un plan médian vertical du siège.

Il est bien sûr préférable d'utiliser deux sacs gonflables se déployant à droite et à gauche de l'appui-tête, mais dans certains cas, il est possible de prévoir un seul sac gonflable se déployant de manière à protéger la tête et le cou du passager du véhicule automobile sur un côté et à envelopper et à maintenir le torse de l'occupant à partir d'un des côtés de l'appui-tête. Dans tous les cas, le ou les sac gonflables, une fois activés pour leur gonflement, ne doivent commencer à se dégonfler qu'à partir du moment où on peut estimer que le véhicule accidenté est totalement immobilisé.

On doit donc prévoir un module de commande et un détecteur de retournement permettant de commander le gonflement des sacs gonflables dès le début du retournement et une technologie du sac gonflable évitant que celui-ci- ne se dégonfle avant qu'un intervalle de temps suffisant ne se soit écoulé, pour assurer une protection aux passagers pendant toute la durée de l'accident jusqu'à l'arrêt du véhicule automobile.

On peut également prévoir l'utilisation d'un détecteur tel qu'un accéléromètre permettant de déterminer les mouvements du véhicule automobile lors de l'accident.

Le siège suivant l'invention présente, par rapport aux sièges connus équipés de dispositifs de sécurité, les avantages suivants, lors d'un accident de la route :
- il empêche les mouvements verticaux et transversaux du torse et de la tête de l'occupant du siège,
- il répartit mieux les efforts de retenue de l'occupant sur son siège entre les épaules, le cou et la tête de l'occupant,
- le ou les sacs gonflables du siège occupent un volume plus réduit à l'état replié que les dispositifs antérieurs connus de retenue articulés,
- il s'adapte à toutes les morphologies de passager à partir du moment où la hauteur de l'appui-tête est réglée en fonction de la taille de l'occupant.

Bien que le siège de véhicule suivant l'invention présente un intérêt tout particulier dans le cas des cabriolets, ce siège peut être également implanté dans les véhicules de type berline.

## Revendications

1. Siège d'un véhicule automobile comportant un dossier (3) et un appui-tête (4) fixé au-dessus d'une partie supérieure du dossier et comportant une face antérieure (4a) destinée à servir de surface d'appui pour la tête (12) d'un utilisateur (14) du siège (1), l'appui-tête (4) renfermant au moins un sac gonflable (6, 6') relié à une cartouche de gonflement (8, 8') et disposé à l'état replié dans une cavité de la matelassure de l'appui-tête (4), dont le gonflement est commandé par un détecteur (11) d'un événement accidentel, pour faire passer le sac gonflable (6, 6') de l'état replié à l'intérieur de l'appui-tête (4) à un état déployé dans lequel le sac (6, 6') s'étend latéralement par rapport à la tête (12) et au cou (13) et enveloppe une épaule (16, 16') et au moins une partie du thorax (15, 15') de l'utilisateur (14), **caractérisé par le fait que** la cartouche (8, 8') et le sac (6, 6') à l'état replié sont dirigés de manière à faire sortir le sac gonflable de l'appui-tête (4) par l'une des faces suivantes de l'appui-tête : face arrière de l'appui-tête dirigée vers l'arrière du siège à l'opposé de la surface d'appui (6a), face supérieure de l'appui-tête.

2. Siège suivant la revendication 1, **caractérisé par le fait que** la cartouche de gonflement (8, 8') est fixée sur une armature métallique (5) de l'appui-tête (4).

3. Siège de véhicule automobile suivant l'une quelconque des revendications 1 et 2, **caractérisé par le fait que** le sac gonflable (6, 6') à l'état déployé comporte une partie supérieure (6a) constituant un coussin s'étendant latéralement par rapport à l'un des côtés de la tête (12) et du cou (13) de l'occupant (14) du siège de véhicule et une partie inférieure (6b) comportant une portion latérale (6'b) enveloppant une épaule (16, 16') de l'occupant (14) du siège et une portion frontale (6"b) enveloppant une partie du thorax (15, 15') de l'occupant (14).

4. Siège de véhicule automobile suivant l'une quelconque des revendications 1 à 3, **caractérisé par le fait que** le détecteur (11) d'un événement accidentel est un détecteur de retournement du véhicule automobile autour de son axe longitudinal.

5. Siège de véhicule automobile suivant l'une quelconque des revendications 1 à 4, **caractérisé par le fait que** le sac gonflable (6, 6') est prévu pour se dégonfler à partir de son état déployé, seulement après l'immobilisation complète du véhicule automobile à la suite de l'événement accidentel.

6. Siège de véhicule automobile suivant l'une quelconque des revendications 1 à 5, **caractérisé par le fait que** l'appui-tête (4) renferme deux sacs gonflables (6, 6') destinés à se déployer respectivement sur la droite et sur la gauche de l'appui-tête (4) du siège de véhicule automobile (1).

## Patentansprüche

1. Sitz für ein Kraftfahrzeug mit einer Rückenlehne (3) und einer Kopfstütze (4), die oberhalb eines oberen Teils der Rückenlehne befestigt ist und eine Vorderfläche (4a) aufweist, die dazu bestimmt ist, als Anlagefläche für den Kopf (12) eines Benutzers (14) des Sitzes (1) zu dienen, welche Kopfstütze (4) wenigstens eine aufblasbaren Sack (6, 6') enthält, der mit einer Gaspatrone (8, 8') verbunden ist und im zusammengelegten Zustand in einem Hohlraum des Polsters der Kopfstütze (4) angeordnet ist, dessen Aufblasen von einem Detektor (11) für ein unvorhergesehenes Ereignis gesteuert wird, so dass der aufblasbare Sack (6, 6') vom zusammengelegten Zustand im Inneren der Kopfstütze (4) in einen aufgeblasenen Zustand gebracht wird, in dem sich der Sack (6, 6') seitlich bezüglich des Kopfes (12) und des Halses (13) des Benutzers (14) erstreckt und eine Schulter (16, 16') und wenigstens einen Teil des Brustkorbes (15, 15') des Benutzers (14) umhüllt, **dadurch gekennzeichnet dass** die Patrone (8, 8') und der Sack (6, 6') im zusammengelegten zustand so ausgerichtet sind, dass der aufblasbare Sack aus der Kopfstütze (4) über eine der folgenden Flächen der Kopfstütze austritt: Rückfläche der Kopfstütze, die zur Rückseite des Sitzes gerichtet ist und der Anlagefläche (6a) gegenüber liegt, obere Außenfläche der Kopfstütze.

2. Sitz nach Anspruch 1, **dadurch gekennzeichnet, dass** die Gaspatrone (8, 8') an einer metallischen Verankerung (5) der Kopfstütze (4) befestigt ist.

3. Sitz für ein Kraftfahrzeug nach einem der Ansprüche 1 und 2, **dadurch gekennzeichnet, dass** der aufblasbare Sack (6, 6') im aufgeblasenen Zustand einen oberen Teil (6a), der ein Kissen bildet, das seitlich bezüglich einer der Seiten des Kopfes (12) und des Halses (13) des Insassen (14) des Fahrzeugsitzes verläuft, und einen unteren Teil (6b) aufweist, der einen seitlichen Teil (6'b), der eine Schulter (16, 16') des Insassen (14) des Sitzes umhüllt, und einen vorderen Teil (6"b) umfasst, der einen Teil des Brustkorbes (15, 15') des Insassen (14) umhüllt.

4. Sitz für eine Kraftfahrzeug wach einem der Ansprüche 1 bis 3, **dadurch gekennzeichnet, dass** der Detektor (11) für ein unvorhergesehenes Ereignis ein Detektor für eine Drehung des Kraftfahrzeuges um seine Längsachse ist.

5. Sitz für ein Kraftfahrzeug nach einem der Ansprüche 1 bis 4, **dadurch gekennzeichnet, dass** der aufblasbare Sack (6, 6') so ausgebildet ist, dass er vom aufgeblasenen Zustand nur dann wieder zusammengelegt werden kann, wenn das Kraftfahrzeug nach dem unvorhergesehenen Ereignis vollständig zum Stillstand gekommen ist.

6. Sitz für ein Kraftfahrzeug nach einem der Ansprüche 1 bis 5, **dadurch gekennzeichnet, dass** die Kopfstütze (4) zwei aufblasbare Säcke (6, 6') enthält, die dazu bestimmt sind, sich jeweils nach rechts und nach links von der Kopfstütze (4) des Sitzes des Kraftfahrzeuges (1) aufzublasen.

## Claims

1. Motor vehicle seat comprising a back (3) and a headrest (4) secured on top of an upper part of the back and comprising a front face (4a) intended to act as a support for the head (12) of a user (14) of the seat (1), the headrest (4) containing at least one inflatable bag (6, 6') connected to an inflation cartridge (8, 8') and arranged, in its folded state, in a cavity in the upholstery of the headrest (4) and the inflation of which is controlled by an accident detector (11) to make the inflatable bag (6, 6') pass from a folded state inside the headrest (4) to a deployed state in which the bag (6, 6') extends laterally in relation to the head (12) and neck (13) and covers one shoulder (16, 16') and at least one part of the thorax (15, 15') of the user (14), **characterised in that** the cartridge (8, 8') and the bag (6, 6') in its folded state are directed in such a way so as to make the inflatable bag of the headrest (4) emerge via one of the following faces of the headrest : the rear face of the headrest facing the back of the seat opposite the support (6a), the upper face of the headrest.

2. Seat according to claim 1, **characterised in that** the inflation cartridge (8, 8') is fixed onto a metal frame (5) of the headrest (4).

3. Motor vehicle seat according to any of claims 1 and 2, **characterised in that** the inflatable bag (6, 6') in the deployed state comprises an upper part (6a) consisting of a cushion extending laterally relative to one side of the head (12) and neck (13) of the occupant (14) of the vehicle seat and a lower part (6b) consisting of a lateral portion (6'b) covering one shoulder (16, 16') of the occupant (14) of the seat and a frontal portion (6"b) covering one part of the thorax (15, 15') of the occupant (14).

4. Motor vehicle seat according to any of claims 1 to 3, **characterised in that** the accident detector (11) is a detector of the motor vehicle reversing about its longitudinal axis.

5. Motor vehicle seat according to any of claims 1 to 4, **characterised in that** the inflatable bag (6, 6') is provided to deflate from its deployed state only after the motor vehicle has been completely immobilised following an accident.

6. Motor vehicle seat according to any of claims 1 to 5, **characterised in that** the headrest (4) contains two inflatable bags (6, 6') intended to be deployed, respectively, on the right and left of the headrest (4) of the motor vehicle seat (1).
